# EUROPÄISCHE PATENTSCHRIFT

(11) **EP 3 083 836 B1**
(45) Veröffentlichungstag und Bekanntmachung des Hinweises auf die Patenterteilung: **13.12.2017**
(21) Anmeldenummer: 13814147.8
(22) Anmeldetag: 20.12.2013
(51) Int. Cl.: C09C 1/30, C09D 5/44, C09D 17/00, C25D 13/00, C09D 163/00, C09D 5/08, C25D 13/12, C25D 13/18, C25D 13/22

(54) **VERFAHREN ZUR HERSTELLUNG EINER PIGMENTPASTE, WÄSSRIGER ELEKTROTAUCHLACK, VERWENDUNG DESSELBEN, VERFAHREN ZUR KATAPHORETISCHEN ELEKTROTAUCHLACKIERUNG UND BESCHICHTETER GEGENSTAND**
METHOD FOR PRODUCING A PIGMENT PASTE, AQUEOUS ELECTROCOAT, ITS USE, METHOD FOR CATAPHORETIC ELECTROCOATING AND ARTICLE COATED
PROCÉDÉ DE PRODUCTION D'UNE PÂTE PIGMENTAIRE, PEINTURE AQUEUSE POUR ÉLECTRODÉPOSITION, SON UTILISATION, PROCÉDÉ DE PEINTURE PAR ÉLECTRODÉPOSITION CATAPHORÉTIQUE ET OBJET REVÊTU

(43) Veröffentlichungstag der Anmeldung: 26.10.2016
(73) Patentinhaber: BASF Coatings GmbH, 48165 Münster (DE)
(72) Erfinder: HERRMANN, Ute, 42111 Wuppertal (DE); HOLTSCHULTE, Sabine, 59387 Ascheberg (DE); SCHULTE, Rolf, 48329 Havixbeck (DE); OTT, Günther, 48167 Münster (DE); GELBRICH, Thorsten, 40215 Düsseldorf (DE); STOLL, Dominik, 40225 Düsseldorf (DE); SINNWELL, Sebastian, 40239 Düsseldorf (DE); MARKOU, Konstantinos, 50739 Köln (DE)
(74) Vertreter: BASF IP Association
(86) Internationale Anmeldenummer: PCT/EP2013/077808
(87) Internationale Veröffentlichungsnummer: WO 2015/090469

(56) Entgegenhaltungen:
- WO-A1-2008/088151
- WO-A2-00/03070
- DE-A1- 3 942 766
- DE-A1-102008 023 444

## Beschreibung

Die vorliegende Erfindung betrifft ein Verfahren zur Herstellung einer Pigmentpaste, bei der mindestens ein aus festen Partikeln bestehendes Pigment in Gegenwart von Wasser und/oder einer organischen Flüssigkeit mit einem Reibharz vermischt wird. Die Erfindung betrifft auch eine Pigmentpaste, die nach dem Verfahren erhältlich ist, einen wässrigen Elektrotauchlack, der die Pigmentpaste enthält, die Verwendung des Elektrotauchlacks, ein Verfahren zur kataphoretischen Elektrotauchlackierung und einen Gegenstand, der nach dem Verfahren beschichtet worden ist.

Pigmentpasten werden auch als Malpaste, Reibgut oder Malgut bezeichnet. Es handelt sich hierbei um denjenigen Teil des Rezepts bei der Herstellung von Lacken und Druckfarben, der die zu dispergierenden Pigmente und Füllstoffe sowie die zu deren Dispergieren notwendigen Bindemittel, Lösemittel und Additive enthält (Römpp Lexikon, Lacke und Druckfarben, Georg Thieme Verlag, 10. Auflage 1998). Pigmentpasten werden also zur Pigmentierung von Farben, Lacken und Druckfarben eingesetzt, die ein härtbares Harzsystem enthalten.

Ein Reibharz hat die Aufgabe, die Pigmentoberfläche zu benetzen und hierdurch die Dispergierung der Pigmentpartikel beispielsweise in Farben und Lacken, insbesondere in wasserbasierten Farben und Lacken, zu verbessern. Weiterhin weist das Reibharz reaktive Gruppen auf, die bei der Härtung des Harzsystems der Farben bzw. Lacke mit Komponenten des Harzsystems reagieren können und so die Pigmentpartikel fest in das ausgehärtete Harz einbinden. Dabei handelt es sich im Rahmen der vorliegenden Erfindung insbesondere um Pigmentpasten, die in Elektrotauchlacken eingesetzt werden. Das betreffende Reibharz zeichnet sich gegenüber dem auf dem bevorzugten Einsatzgebiet üblichen Standard-Reibharz insbesondere dadurch aus, dass bei der kathodischen Elektrotauchlackierung von Aluminiumoberflächen eine Verringerung von Lackdefekten (so genannten "pinholes") erreicht wird.

Kern-Schale-Partikel, die in der Regel in einer Trägerflüssigkeit dispergiert sind, sind als Additive zur Erhöhung der Festigkeit und/oder der Schlagfestigkeit (so genannte "toughening agents") in Harzsystemen bekannt, beispielsweise in Klebstoffen, Lacken und Beschichtungsmitteln. DE 3942766 A1 offenbart ein Verfahren zur Beschichtung elektrisch leitfähiger Substrate unter Verwendung eines wässrigen Elektrotauchlackes, wobei der Lack mittels einer Pigmentpaste hergestellt wird. Das zur Herstellung der Pigmentpaste verwendete Reibharz besteht aus einem teilweise protoniertem Epoxid-Aminaddukt und ist bei Raumtemperatur flüssig. JP 03-006296 A offenbart die Verwendung von Kern-Schale-Partikeln zur Herstellung einer matten kathodisch abscheidbaren Elektrotauchlack-Zusammensetzung. Die Partikel bestehen aus einem Kern aus hydrophobem Polymer mit einer Gel-Fraktion von 20 - 100 %, erhalten durch Polymerisation eines hydrophoben Monomers, eines vernetzenden Monomers und optional eines "craftcrosslinking" Monomers, und einer Hülle aus einem hydrophilen Polymer mit einer Tg von 10-35 °C und "wasserdispergierbaren funktionellen Gruppen", erhältlich durch Polymerisation einer ethylenisch ungesättigten Carbonsäure und eines Monomers mit einer Glastemperatur unterhalb von 30 °C. Die Aufgabe dieser Erfindung besteht demnach darin, eine KTL-Beschichtung mit einem matten Aussehen zur Verfügung zu stellen.

EP 305060 A2 offenbart einen detaillierten Herstellprozess für Kern-Schale-Partikel und eine kataphoretisch abscheidbare Harzmischung auf Basis eines Polyolharzes, die die entsprechend hergestellten Kern-Schale-Partikel enthält. Die Kern-Schale-Partikel sind erhältlich durch Polymerisation eines a) Hydroxylgruppen-haltigen alpha-beta-ethylenisch ungesättigten Monomers (Anspruch 2: (Meth)acrylsäureester mit weiteren Polyether- oder Polyestergruppen und terminalem -OH), b) polyfunktionalen alpha-beta-ethylenisch ungesättigten Monomers c) eines weiteren, von a) und b) verschiedenen alpha-beta-ethylenisch ungesättigten Monomers. Die Kern-Schale-Partikel werden erhalten, indem man zunächst nur b) und c) polymerisiert und anschließend restliches b) und c) zusammen mit a). Damit sollte der Kern aus Polyolefin bestehen, während die Schale eine Acrylatkomponente enthält.

EP 560189 A2 offenbart "Kunstharze" aus einem weiten chemischen Spektrum, die Kern-Schale-Polymere enthalten. Zusätzlich können Vernetzer, Pigmente und weitere Zusatzstoffe vorhanden sein. Nähere Angaben zum Kern-Schale-Partikel sind in den Ansprüchen 3 und 4 dieses Dokuments zusammengefasst:

### Variante gemäß Anspruch 3:

Der Kern ist erhältlich durch Polymerisation mindestens eines konjugierten Diens, mindestens eines vinylaromatischen Monomers und optional eines zwei-bis mehrfach ethylenisch ungesättigten Monomers mit mindestens einer nicht konjugierten Doppelbindung. Die Schale ist erhältlich durch Polymerisation mindestens eines vinylaromatischen Monomers, mindestens eines Alkylmethacrylats und optional weiterer Acrylate und/oder zwei-bis mehrfach ethylenisch ungesättigter Monomere mit mindestens einer nicht konjugierten Doppelbindung und/oder "weitere Monomere". Damit sollte der Kern aus Polyolefin bestehen, während die Schale eine Acrylatkomponente enthält.

### Variante gemäß Anspruch 4:

Der Kern ist erhältlich durch Polymerisation mindestens eines vinylaromatischen Monomers mit (jeweils optional): Alkyl(meth)acrylat, zwei-bis mehrfach ethylenisch ungesättigten Monomeren mit mindestens einer nicht konjugierten Doppelbindung und/oder "weitere Monomere". Eine erste Schale ist erhältlich durch Polymerisation mindestens eines konjugierten Diens, mindestens eines vinylaromatischen Monomers und optional zwei-bis mehrfach ethylenisch ungesättigter Monomere mit mindestens einer nicht konjugierten Doppelbindung und/oder "weiterer Monomere". Eine zweite Schale ist erhältlich durch Polymerisation mindestens eines vinylaromatischen Monomers, mindestens eines Alkylmethacrylats und optional weiterer Acrylate und/oder zwei-bis mehrfach ethylenisch ungesättigter Monomere mit mindestens einer nicht konjugierten Doppelbindung und/oder "weiterer Monomere".

Demnach ist die Verwendung von Kern-Schale-Partikel, die einen Polyolefinkern aufweisen, in Lacken, einschließlich kathodisch abscheidbaren Elektrotauchlacken, bekannt. Keines der oben genannten Dokumente erwähnt jedoch die Problematik, dass insbesondere bei der kathodischen Elektrotauchlackierung von Aluminiumoberflächen häufig Lackdefekte, so genannte "pinholes" auftreten können. "Pinholes" sind kleine Löcher in der Lackierung, die zu einer Verschlechterung des Korrosionsschutzes führen. Durch die vorliegende Erfindung, die auf einer Auswahl spezieller Kern-Schale-Partikel beruht, wird dieser Nachteil weit gehend vermieden. Ein weiterer Vorteil dieser Erfindung liegt darin, dass sich die speziell ausgewählten Kern-Schale-Partikel gut in Pigmentpasten einarbeiten lassen.

Ziel der vergleichenden Experimente war es, zu zeigen, dass durch die Verwendung von Kern-Schale Partikeln mit unterschiedlichen Kernen in verschiedenen Konzentrationen eine unterschiedlich stark verbesserte Beschaffenheit der Beschichtung erreicht wird. Insbesondere die Verwendung von Kern-Schale-Partikeln mit Silicon-Kern führte zu einer deutlichen Reduktion von Defekten (so genannten "Pinholes") auf Aluminiumoberflächen und einer Verbesserung im Korrosionsschutz.

Gegenstand der vorliegenden Erfindung ist also ein Verfahren der eingangs genannten Art zur Herstellung einer Pigmentpaste, das dadurch gekennzeichnet ist, dass das Reibharz eine Dispersion von Kern-Schale-Partikeln in einem bei 20°C flüssigen Epoxid-Präpolymeren enthält oder aus einer solchen Dispersion besteht und die Kern-Schale-Partikel einen Siliconkern und eine Polymerhülle aufweisen.

Kern-Schale-Partikel mit einem Siliconkern und einer Polymerhülle sind als Handelsprodukte der Firma Kaneka beispielsweise unter der Bezeichnung Kane Ace® MX 960 kommerziell erhältlich. Bei den Produkten handelt es sich um eine Dispersion der Partikel in einem flüssigen Epoxidharz.

Vorteilhaft wird die nach dem erfindungsgemäßen Verfahren hergestellte Mischung homogenisiert. Bei der Homogenisierung werden die Pigmentpartikel vorteilhafterweise durch Einbringung von mechanischer Energie auf eine vorgewählte Teilchengröße zerkleinert und dispergiert.

Die Polymerhülle der Kern-Schale-Partikel enthält vorteilhaft Poly(meth)acrylate.

Das flüssige Epoxid-Präpolymer, in dem die Kern-Schale-Partikel vorliegen weist vorteilhaft ein Epoxy-Äquivalentgewicht im Bereich von 150 bis 300 g/eq auf.

Vorteilhaft wird die Dispersion von Kern-Schale-Partikeln in einem bei 20°C flüssigen Epoxid-Präpolymeren in einer solchen Menge eingesetzt, dass die fertige Pigmentpaste 1 - 6 Gew.-%, bezogen auf die Gesamtmenge des Reibharzes, Kern-Schale-Partikel enthält.

Die Erfindung betrifft auch eine Pigmentpaste, die nach einem Verfahren gemäß einem oder mehreren der Patentansprüche 1 bis 6 erhältlich ist.

Die Erfindung betrifft weiterhin einen wässrigen Elektrotauchlack, der ein kataphoretisch abscheidbares Harzsystem und eine erfindungsgemäße Pigmentpaste enthält.

Das Harzsystem des wässrigen Elektrotauchlacks enthält vorteilhaft Monomere oder Präpolymere auf Epoxidbasis und mindestens einen Härter für Epoxide.

In einer bevorzugten Ausführungsform liegt der erfindungsgemäße Elektrotauchlack als Miniemulsion vor.

Miniemulsionen sind Dispersionen aus Wasser, einer Ölphase und einer oder mehreren oberflächenaktiven Substanzen, wobei die dispergiert vorliegenden Teilchen einen mittleren Teilchendurchmesser von 5 bis 500 nm aufweisen. Miniemulsionen werden als metastabil angesehen (vgl. Emulsion Polymerization and Emulsion Polymers, Editoren. P. A. Lovell und Mohamed S. El-Aasser, John Wiley and Sons, Chichester, New York, Weinheim, 1997, Seiten 700ff; Mohamed S. EI-Aasser, Advances in Emulsion Polymerization and Latex Technology, 30th Annual Short Course, Volume 3, June 7-11, 1999, Emulsion Polymers Institute, Lehigh University, Bethlehem, Pennsylvania, U. S. A.). Die sogenannten Miniemulsionen finden in der Technik breite Anwendung beispielsweise in Reinigern, Kosmetika oder Körperpflegeprodukten, aber auch Beschichtungsmittelzusammensetzungen wie beispielsweise Elektrotauchlacken.

Die Herstellung wässriger Primärdispersionen mit Hilfe der Miniemulsionspolymerisation ist beispielsweise aus den internationalen Patentanmeldungen WO 82/00148 und WO 98/02466 oder den deutschen Patentanmeldungen DE 196 28 143 A1 und DE 196 28 142 A2 bekannt. Bei diesen bekannten Verfahren können die Monomeren in der Gegenwart unterschiedlicher niedermolekularer, oligomerer oder polymerer hydrophober Substanzen oder Costabilisatoren copolymerisiert werden (vgl. DE 196 28 142 A2). Außerdem können hydrophobe, in Wasser wenig lösliche organische Hilfsmittel wie beispielsweise Weichmacher, Filmbildehilfsmittel wie beispielsweise Koaleszenzmittel, oder sonstige organische Additive in die Monomertröpfchen der Miniemulsion eingearbeitet werden (vgl. DE 196 28 143 A1). Die WO 82/00148 beschreibt beispielsweise den Einsatz von Emulgatoren zur Stabilisierung der dort offenbarten Emulsionen.

WO 82/00148 offenbart insbesondere die Herstellung von kathodisch abscheidbaren Harzemulsionen, u.a. Miniemulsionen, unter Verwendung kationisch einstellbarer Emulgatoren, die sich an der Oberfläche der Partikel anlagern und diesen eine positive Ladung verleihen, welche die Emulsion bei pH-Werten unterhalb von 10 stabilisiert. Die Emulgatoren können reaktive Gruppen tragen, durch die sie bei der Vernetzungsreaktion in das polymere Harzsystem eingebunden werden können. Explizit genannte Beispiele für Emulgatoren sind die Essigsäuresalze von Fettmono- und -Diaminen wie primären Talg- und Oleylamine oder die Essigsäuresalze von Talg- und Oleyldiaminen. Talg- und Oleylamine enthalten Kohlenwasserstoffketten mit mindestens einer Kohlenstoff-Kohlenstoff-Doppelbindung. Auch polymere Emulgatoren können eingesetzt werden, wie beispielsweise ein Epoxy-Phenol-Addukt, das mit Diethanolamin umgesetzt und mit Essigsäure kationisch eingestellt wurde. Als Co-Emulgator wird in einigen Ausführungsbeispielen der WO 82/00148 Ethoduomeen™ T13 eingesetzt, welches ein tertiäres Amin mit ungesättigtem Alkylrest darstellt. Laut Angabe des Herstellers AkzoNobel handelt es sich um N',N',N-Tris-(2-hydroxyethyl)-N-tallowyl-1,3-diaminopropan. Gemäß der Lehre der WO 82/00148 sind die kationisch eingestellten Emulgatoren die einzigen kationischen Komponenten des Harzsystems.

In einer Studie von Grabs und Schmidt-Naake (Macromol. Symp. 2009, 275-276, S133-141) werden Miniemulsionen aus 2-Aminoethylmethacrylat-Hydrochlorid und Styrol, Butylacrylat und/oder Butylmethacrylat hergestellt und in-situ polymersiert, wobei Harzpartikel entstehen, die aufgrund der positiven Ladung des Aminoethylmethacrylat-Monomers eine positive Oberflächenladung tragen und hierdurch in der Dispersion stabilisiert werden. Als kationischer Co-Emulgator bei der Dispersionsherstellung kann das gesättigte Cetyltrimethylammoniumbromid eingesetzt werden, welches ein quaternäres N-Atom aufweist und daher eine permanente positive Ladung trägt. Die positive Ladung wird in beiden Fällen durch Halogenidanionen kompensiert.

Weiterhin vorteilhaft enthält der erfindungsgemäße Elektrotauchlack mindestens 30 ppm, vorzugsweise mindestens 100 ppm, besonders bevorzugt mindestens 200 ppm, insbesondere mindestens 250 ppm Bismut in gelöster Form, wobei die Mengenangaben auf die gesamte Zubereitung bezogen sind und der Gehalt als Bi berechnet ist.

Unter dem Begriff "Bismut" insbesondere im Zusammenhang mit der Gesamtmenge an Bismut in der Beschichtungszusammensetzung werden im Sinne der vorliegenden Erfindung vorzugsweise gegebenenfalls geladene wie zum Beispiel positiv geladene kationische Bismut-Atome unterschiedlicher Wertigkeiten verstanden. Das Bismut kann dabei in trivalenter Form (Bi(III)) vorliegen, kann aber alternativ oder zusätzlich auch in anderen Oxidationsstufen vorliegen. Die Menge an Bismut wird jeweils als Bismut-Metall berechnet.

Die Menge an Bismut, berechnet als Metall, kann mittels der optischen Emissionsspektrometrie mit induktiv gekoppeltem Plasma (ICP-OES) bestimmt werden.

Der erfindungsgemäße Elektrotauchlack enthält vorteilhaft eine Gesamtmenge von wenigstens 30 ppm Bismut, bezogen auf das Gesamtgewicht des Elektrotauchlacks, wobei davon wenigstens 15 ppm Bismut, bezogen auf das Gesamtgewicht des Elektrotauchlacks, in einer gelöst vorliegenden Form vorhanden sind.

Vorzugsweise liegt zumindest teilweise trivalentes Bismut vor. Dieses kann hydratisiert und/oder in Form wenigstens eines gelösten Salzes und/oder eines Komplexes vorliegen.

Unter dem Begriff "in gelöst vorliegender Form" im Zusammenhang mit der erfindungsgemäßen Beschichtungszusammensetzung wird vorzugsweise verstanden, dass die Komponente bei einer Temperatur der Beschichtungszusammensetzung in einem Bereich von 18 bis 40 °C in gelöst vorliegender Form in der Beschichtungszusammensetzung vorliegt.

Vorzugsweise ist die Bismut-Komponente erhältlich aus wenigstens einer Bismut-Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon. Dabei wird wenigstens eine solche Bismut-Verbindung vorzugsweise in Wasser in Gegenwart wenigstens eines Komplexierungsmittels zumindest teilweise umgesetzt.

Der erfindungsgemäße Elektrotauchlack enthält vorteilhaft wenigstens ein zur Komplexierung von Bismut geeignetes wenigstens zweizähniges Komplexierungsmittel.

Die Erfindung betrifft weiterhin die Verwendung eines wässrigen Elektrotauchlacks nach mindestens einem der Patentansprüche 8 bis 10 zur kataphoretischen Elektrotauchlackierung von Metalloberflächen, insbesondere von Aluminiumoberflächen.

Die Erfindung betrifft weiterhin ein Verfahren zur kataphoretischen Elektrotauchlackierung von Metalloberflächen, insbesondere von Aluminiumoberflächen, unter Verwendung eines wässrigen Elektrotauchlacks nach einem der Patentansprüche 8 bis 10.

Das Verfahren wird vorteilhaft zweistufig durchgeführt, indem die Metalloberflächen, insbesondere Aluminiumoberflächen, in einen erfindungsgemäßen wässrigen Elektrotauchlack eingetaucht werden und wobei in einer ersten Stufe eine Spannung im Bereich von 1 bis 50 V und in einer zweiten Stufe eine Spannung im Bereich von 50 bis 400 V, jedoch mindestens 10 V mehr als in der ersten Stufe angelegt wird und die Spannung in jeder Stufe für mindestens 10 Sekunden innerhalb des jeweils genannten Bereichs aufrecht erhalten wird.

Schließlich betrifft die Erfindung auch einen Gegenstand, der zumindest teilweise Metalloberflächen, insbesondere Aluminiumoberflächen aufweist, die nach dem erfindungsgemäßen Verfahren beschichtet worden sind.

Zur Herstellung des beschichteten Gegenstands eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignet sich Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Das erfindungsgemäß eingesetzte elektrisch leitfähige Substrat kann zudem ein chromatiertes Substrat sein. Eine solche Vorbehandlung mittels einer Phosphatierung oder Chromatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist. Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrat noch vor einer Beschichtung mit der wässrigen Beschichtungszusammensetzung (A) durchgeführt wird.

Es ist jedoch vorteilhaft, dass auf eine solche Vorbehandlung des zumindest teilweise zu beschichtenden elektrisch leitfähigen Substrats mittels Phosphatierung mit einem Metallphosphat wie beispielsweise Zinkphosphat oder mittels einer Chromatierung verzichtet werden kann. In einer bevorzugten Ausführungsform ist das erfindungsgemäß eingesetzte elektrisch leitfähige Substrat daher kein solches phosphatiertes oder chromatiertes Substrat.

Das erfindungsgemäß eingesetzte elektrisch leitfähige Substrat kann noch vor einer Beschichtung mit dem erfindungsgemäß eingesetzten wässrigen Elektrotauchlack mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Im Folgenden wird die Erfindung anhand von Ausführungsbeispielen näher erläutert.

### Ausführungs- und Vergleichsbeispiele

### Vergleichsbeispiel 1:

### • Vergleichsbeispiel: Herstellung einer wässrigen Zubereitung zur Überprüfung der Beschichtungseigenschaften mit Bismut-Komplex

In der 42,60 Teile einer 40%igen kationischen Elektrotauchlack-Dispersion (CathoGuard ® 520, Verkaufsprodukt der Firma BASF Coatings GmbH) werden mit 49,94 Teilen VE-Wasser vermischt. Anschließend werden 6,12 Teile einer wässrigen Pigmentzubereitung (CathoGuard® 520 Pigmentpaste, Verkaufsprodukt der Firma BASF Coatings GmbH) zusammen mit 1,34 Teilen einer wässrigen Bismut-L(+)-Lactat-Lösung unter Rühren hinzugefügt.

### Beispiele 2, 3, 4:

### • Beispiele: Modifikation der Pigmentpaste und Herstellung einer wässrigen Zubereitung zur Überprüfung der Beschichtungseigenschaften mit Bismut-Komplex und Kern-Schale-Partikeln mit einem Siliconkern

Es wird eine wässrige Pigmentpaste auf der Basis der Rezeptur einer für den Einsatz im Elektrotauchlack üblichen Zusammensetzung (CathoGuard® 520 Pigmentpaste, Verkaufsprodukt der Firma BASF Coatings GmbH) hergestellt.

In dieser Pigmentpasten-Formulierung werden 1, 5 und 10 % des üblicherweise eingesetzten Reibharzes bezogen auf den Festkörper ausgetauscht und ein Kern-Schale-Partikel enthaltendes Produkt, das einen Silicon-Kern enthält (KANE ACE MX 960), eingesetzt und wie oben beschrieben wässrige Pigmentpasten hergestellt. Die Anteile des Kern-Schale-Partikel enthaltenden Produktes in der modifizierten Pigmentpasten-Formulierung entsprechen 0,71% in Beispiel 3, 54% in Beispiel 4, 6,97 % in Beispiel 5.

42,60 Teile einer 40%igen kationischen Elektrotauchlack-Dispersion (CathoGuard ® 520, Verkaufsprodukt der Firma BASF Coatings GmbH) werden mit 49,94 Teilen VE-Wasser vermischt.

**Tabelle 1: Zusammensetzungen der Prüfbäder (alle Angaben in Gewichts-Teilen)**

| | Vergleichsbeispiel 1 | Beispiel 2 | Beispiel 3 | Beispiel 4 |
|---|---|---|---|---|
| VE-Wasser | 49,94 | 49,94 | 49,94 | 49,94 |
| Bindemittel-Dispersion CathoGuard® 520 | 42,60 | 42,60 | 42,60 | 42,60 |
| Pigmentpaste (CathoGuard® 520) | 6,12 | | | |
| Pigmentpaste (Basis CathoGuard® 520 enthaltend 6,97% Kane Ace 156) | | | | |
| Pigmentpaste (Basis CathoGuard® 520 enthaltend 0,71% Kane Ace 960) | | 6,12 | | |
| Pigmentpaste (Basis CathoGuard® 520 enthaltend 3,54% Kane Ace 960) | | | 6,12 | |
| Pigmentpaste (Basis CathoGuard® 520 enthaltend 6,97% Kane Ace 960) | | | | 6,12 |
| Bismut-L(+)-lactat 11,9 % Bi | 1,34 | 1,34 | 1,34 | 1,34 |

Anschließend werden 6,12 Teile der oben beschriebenen wässrigen Pigmentzubereitungen zusammen mit 1,34 Teilen einer wässrigen Bismut-L(+)-Lactat-Lösung unter Rühren hinzugefügt.

### Ergebnisse:

### Oberflächenbeschaffenheit/ Defekte

Die insbesondere auf Aluminium-Substraten entstehenden Defekte in der grauen Beschichtung werden durch einen Test sichtbar gemacht. Hierbei wird auf der entsprechend der Vorgaben beschichteten und eingebrannten Tafel eine weitere Applikation mit einem schwarzen Elektrotauchlack durchgeführt. Nach Abspülen und Einbrennen erscheinen die Defekte ("Pinholes") schwarz, da an diesen Stellen die eigentliche Beschichtung Löcher aufweist. Eine Auswertung ist durch Zählen der Defekte innerhalb eines cm² auf den jeweiligen Testtafeln erfolgt (Tabelle 2).

**Tabelle 2: Anzahl der "Pinholes" auf 1cm² Fläche der entsprechenden Testtafeln**

| | Vergleichsbeispiel 1 | Beispiel 2 | Beispiel 3 | Beispiel 4 |
|---|---|---|---|---|
| Anzahl Defekte [Stück auf 1 cm²] | 56 | 48 | 12 | 3 |

### Korrosionsschutz

**Tabelle 3: Ergebnisse Korrosion/ Enthaftung nach 10 Tagen CASS Test auf Aluminium (Copper Accelerated Acetic Acid Salt Spray Test acc.to DIN EN ISO 9227 CASS)**

| | Vergleichsbeispiel 1 | Beispiel 2 | Beispiel 3 | Beispiel 4 |
|---|---|---|---|---|
| Korrosion/ Enthaftung [mm] | 1,5 | 2 | 1 | 0,9 |

**Tabelle 4: Längster Faden nach 42 Tagen Filiform Test auf Aluminium (Filiform acc. to DIN EN 3665)**

| | Vergleichsbeispiel 1 | Beispiel 2 | Beispiel 3 | Beispiel 4 |
|---|---|---|---|---|
| Längster Faden [mm] | 7,8 | 8,3 | 5,5 | 4 |

## Patentansprüche

1. Verfahren zur Herstellung einer Pigmentpaste, bei der mindestens ein aus festen Partikeln bestehendes Pigment in Gegenwart von Wasser und/oder einer organischen Flüssigkeit mit einem Reibharz vermischt wird, **dadurch gekennzeichnet, dass** das Reibharz eine Dispersion von Kern-Schale-Partikeln in einem bei 20°C flüssigen Epoxid-Präpolymeren enthält oder aus einer solchen Dispersion besteht und die Kern-Schale-Partikel einen Siliconkern und eine Polymerhülle aufweisen.

2. Verfahren nach Anspruch 1, **dadurch gekennzeichnet, dass** die erhaltene Mischung homogenisiert wird.

3. Verfahren nach Anspruch 2, **dadurch gekennzeichnet, dass** die Pigmentpartikel bei der Homogenisierung durch Einbringung von mechanischer Energie auf eine vorgewählte Teilchengröße zerkleinert und dispergiert werden.

4. Verfahren nach einem oder mehreren der Ansprüche 1 bis 3, **dadurch gekennzeichnet, dass** die Polymerhülle der Kern-Schale-Partikel Poly(meth)acrylate enthält.

5. Verfahren nach einem oder mehreren der Ansprüche 1 bis 4, **dadurch gekennzeichnet, dass** das bei 20°C flüssige Epoxid-Präpolymer ein Epoxy-Äquivalentgewicht im Bereich von 150 bis 300g/eq aufweist.

6. Verfahren nach einem oder mehreren der Ansprüche 1 bis 5, **dadurch gekennzeichnet, dass** die Dispersion von Kern-Schale-Partikeln in einem bei 20°C flüssigen Epoxid-Präpolymeren in einer solchen Menge eingesetzt wird, dass die fertige Pigmentpaste 1 bis 6 Gew.-%, bezogen auf die Gesamtmenge des Reibharzes, Kern-Schale-Partikel enthält.

7. Pigmentpaste, die nach einem Verfahren nach einem oder mehreren der Ansprüche 1 bis 6 erhältlich ist.

8. Wässriger Elektrotauchlack, der ein kataphoretisch abscheidbares Harzsystem und eine Pigmentpaste nach Anspruch 7 enthält.

9. Wässriger Elektrotauchlack nach Anspruch 8, **dadurch gekennzeichnet, dass** das Harzsystem Monomere oder Präpolymere auf Epoxidbasis und mindestens einen Härter für Epoxide enthält.

10. Wässriger Elektrotauchlack nach einem oder mehreren der Ansprüche 8 und 9, **dadurch gekennzeichnet, dass** er als Miniemulsion vorliegt.

11. Wässriger Elektrotauchlack nach einem oder mehreren der Ansprüche 8 bis 10, **dadurch gekennzeichnet, dass** er mindestens 30 ppm, vorzugsweise mindestens 100 ppm, besonders bevorzugt mindestens 200 ppm, insbesondere mindestens 250 ppm Bismut in gelöster Form enthält, bezogen auf die gesamte Zubereitung und als Bi gerechnet.

12. Verwendung eines wässrigen Elektrotauchlacks nach mindestens einem der Ansprüche 8 bis 10 zur kataphoretischen Elektrotauchlackierung von Metalloberflächen, insbesondere von Aluminiumoberflächen.

13. Verfahren zur kataphoretischen Elektrotauchlackierung von Metalloberflächen, insbesondere von Aluminiumoberflächen, unter Verwendung eines wässrigen Elektrotauchlacks nach einem der Ansprüche 8 bis 10.

14. Verfahren nach Anspruch 13, wobei dieses zweistufig durchgeführt wird, indem die Metalloberflächen, insbesondere Aluminiumoberflächen, in einen wässrigen Elektrotauchlack nach Anspruch 9 eingetaucht werden und wobei in einer ersten Stufe eine Spannung im Bereich von 1 bis 50 V und in einer zweiten Stufe eine Spannung im Bereich von 50 bis 400 V, jedoch mindestens 10 V mehr als in der ersten Stufe angelegt wird und die Spannung in jeder Stufe für mindestens 10 Sekunden innerhalb des jeweils genannten Bereichs aufrecht erhalten wird.

15. Gegenstand, der zumindest teilweise Metalloberflächen, insbesondere Aluminiumoberflächen aufweist, die mit einem Verfahren nach Anspruch 13 oder 14 beschichtet worden sind.

## Claims

1. Method for producing a pigment paste by mixing at least one pigment, consisting of solid particles, with a grind resin in the presence of water and/or an organic liquid, **characterized in that** the grind resin comprises a dispersion of core-shell particles in an epoxide prepolymer which is liquid at 20°C, or consists of such a dispersion, and the core-shell particles have a silicone core and a polymer shell.

2. Method according to Claim 1, **characterized in that** the resulting mixture is homogenized.

3. Method according to Claim 2, **characterized in that** the pigment particles, in the course of the homogenizing, are comminuted to a preselected particle size and dispersed by introduction of mechanical energy.

4. Method according to one or more of Claims 1 to 3, **characterized in that** the polymer shell of the core-shell particles comprises poly(meth)acrylates.

5. Method according to one or more of Claims 1 to 4, **characterized in that** the epoxide prepolymer which is liquid at 20°C has an epoxy equivalent weight in the range from 150 to 300 g/eq.

6. Method according to one or more of Claims 1 to 5, wherein the dispersion of core-shell particles is used in an epoxide prepolymer which is liquid at 20°C, in an amount such that the completed pigment paste comprises 1 to 6 wt% of core-shell particles, based on the total amount of the grind resin.

7. Pigment paste obtainable by a method according to one or more of Claims 1 to 6.

8. Aqueous electrocoat material which comprises a cataphoretically depositable resin system and a pigment paste according to Claim 7.

9. Aqueous electrocoat material according to Claim 8, **characterized in that** the resin system comprises epoxide-based monomers or prepolymers and at least one curing agent for epoxides.

10. Aqueous electrocoat material according to one or both of Claims 8 and 9, **characterized in that** it is in the form of a miniemulsion.

11. Aqueous electrocoat material according to one or more of Claims 8 to 10, **characterized in that** it contains at least 30 ppm, preferably at least 100 ppm, more preferably at least 200 ppm, more particularly at least 250 ppm of bismuth in dissolved form, based on the total preparation and reckoned as Bi.

12. Use of an aqueous electrocoat material according to at least one of Claims 8 to 10 for the cataphoretic electrocoating of metal surfaces, more particularly of aluminum surfaces.

13. Method for cataphoretic electrocoating of metal surfaces, more particularly of aluminum surfaces, using an aqueous electrocoat material according to any of Claims 8 to 10.

14. Method according to Claim 13, which is carried out in two stages, by immersing the metal surfaces, more particularly aluminum surfaces, into an aqueous electrocoat material according to Claim 9 and in a first stage applying a voltage in the range from 1 to 50 V and in a second stage applying a voltage in the range from 50 to 400 V, but not less than 10 V more than in the first stage, and maintaining the voltage in each stage for at least 10 seconds within the respectively stated range.

15. Article having at least in part metal surfaces, more particularly aluminum surfaces, that have been coated by a method according to Claim 13 or 14.

## Revendications

1. Procédé de fabrication d'une pâte pigmentaire, selon lequel au moins un pigment constitué de particules solides est mélangé en présence d'eau et/ou d'un liquide organique avec une résine de frottement, **caractérisé en ce que** la résine de frottement contient une dispersion de particules noyau-enveloppe dans un prépolymère d'époxyde liquide à 20 °C ou est constituée d'une telle dispersion, et les particules noyau-enveloppe comprennent un noyau de silicone et une enveloppe polymère.

2. Procédé selon la revendication 1, **caractérisé en ce que** le mélange obtenu est homogénéisé.

3. Procédé selon la revendication 2, **caractérisé en ce que** les particules de pigment sont broyées à une taille de particule choisie au préalable et dispersées lors de l'homogénéisation par apport d'énergie mécanique.

4. Procédé selon une ou plusieurs des revendications 1 à 3, **caractérisé en ce que** l'enveloppe polymère des particules noyau-enveloppe contient des poly(méth)acrylates.

5. Procédé selon une ou plusieurs des revendications 1 à 4, **caractérisé en ce que** le prépolymère d'époxyde liquide à 20 °C présente un poids équivalent d'époxy dans la plage allant de 150 à 300 g/éq.

6. Procédé selon une ou plusieurs des revendications 1 à 5, **caractérisé en ce que** la dispersion de particules noyau-enveloppe dans un prépolymère d'époxyde liquide à 20 °C est utilisée en une quantité telle que la pâte pigmentaire finie contienne 1 à 6 % en poids, par rapport à la quantité totale de résine de frottement, de particules noyau-enveloppe.

7. Pâte pigmentaire, qui peut être obtenue par un procédé selon une ou plusieurs des revendications 1 à 6.

8. Peinture de dépôt électrolytique aqueuse, qui contient un système de résine déposable cataphorétiquement et une pâte pigmentaire selon la revendication 7.

9. Peinture de dépôt électrolytique aqueuse selon la revendication 8, **caractérisée en ce que** le système de résine contient des monomères ou des prépolymères à base d'époxyde et au moins un durcisseur pour époxydes.

10. Peinture de dépôt électrolytique aqueuse selon une ou plusieurs des revendications 8 et 9, **caractérisée en ce qu'**elle se présente sous la forme d'une mini-émulsion.

11. Peinture de dépôt électrolytique aqueuse selon une ou plusieurs des revendications 8 à 10, **caractérisée en ce qu'**elle contient au moins 30 ppm, de préférence au moins 100 ppm, de manière particulièrement préférée au moins 200 ppm, notamment au moins 250 ppm de bismuth sous forme dissoute, par rapport à l'ensemble de la préparation et calculé en tant que Bi.

12. Utilisation d'une peinture de dépôt électrolytique aqueuse selon au moins l'une quelconque des revendications 8 à 10 pour la peinture par dépôt électrolytique cataphorétique de surfaces métalliques, notamment de surfaces en aluminium.

13. Procédé de peinture par dépôt électrolytique cataphorétique de surfaces métalliques, notamment de surfaces en aluminium, utilisant une peinture de dépôt électrolytique aqueuse selon l'une quelconque des revendications 8 à 10.

14. Procédé selon la revendication 13, celui-ci étant réalisé en deux étapes, par immersion des surfaces métalliques, notamment des surfaces en aluminium, dans une peinture de dépôt électrolytique aqueuse selon la revendication 9, une tension dans la plage allant de 1 à 50 V étant appliquée lors d'une première étape et une tension dans la plage allant de 50 à 400 V, toutefois au moins supérieure de 10 V à la première étape, lors d'une deuxième étape, la tension étant maintenue à chaque étape pendant au moins 10 secondes dans la plage respective indiquée.

15. Article, qui comprend au moins en partie des surfaces métalliques, notamment des surfaces en aluminium, qui ont été revêtues avec un procédé selon la revendication 13 ou 14.
